# EUROPEAN PATENT APPLICATION

(11) **EP 2 023 165 A1**
(43) Date of publication of application: **11.02.2009**
(21) Application number: 07113953.9
(22) Date of filing: 07.08.2007
(51) Int. Cl.: G01V 11/00, G01V 3/15

(54) **System for detecting reinforcement in structures**

(30) Priority: 24.07.2007 EP 07113070
(71) Applicant: Nederlandse Organisatie voor Toegepast- Natuurwetenschappelijk Onderzoek TNO, 2628 VK Delft (NL)
(72) Inventor: Van Overbeek, Antonius Bernardus, 3033AD Rotterdam (NL); Rhebergen, Jan Berend, 2717CT Zoetermeer (NL)
(74) Representative: Hatzmann, Martin

(57) **Abstract**

System for detecting reinforcement in elements of a structure, comprising a surface detection subsystem (1), e.g. a laser based scanner and processing means, arranged for making a digital 3D representation (image) of each relevant surface of each relevant structural element. A reinforcement detection subsystem (2), e.g. a radar based device (2) and processing means (5c), arranged for making a digital 3D representation (image) containing the position, orientation and diameter of any reinforcement as well as voids, inclusions, cracks and other defects inside each relevant structural element, under control of output of said surface detection subsystem. The system, moreover, may include robot means (3,4) for moving, e.g. under control of the surface detection subsystem and further control means (5a), the surface detection subsystem and/or said reinforcement detection subsystem.

## Description

The invention refers to a system for detecting reinforcement in elements of a structure.

A common problem occurring in construction projects is that it is frequently not known which reinforcement is present in a usually complex reinforced concrete structure. This can be caused by mistakes during the design or building phase of the reinforced concrete structures, or sometimes even by design drawings getting lost. For structural engineers it is very important to know which reinforcement is present in a concrete structure, since the load bearing capacity of the structure very much depends on the reinforcement that is present. More specific it is important to know the position and diameter of the reinforcement accurately.

Prior art reinforcement detection systems include systems of companies like e.g. Hilti (Ferroscan^{™}) or GSSI (e.g. Georadar^{™}). Both systems have a probing sensor, a 1D position locator and a control/processing unit.

The Ferroscan^{™} system has a multi-sensor scanner, basically measuring the gradient of the vertical component of the induced magnetic field along the scanning direction. The probing sensor in GSSI's products and similar surface penetrating radar systems (GPR), operate by sending a tiny pulse of radar energy into a material and recording the strength of and the time required for the return of any reflected signal. A series of pulses over a single area make up what is called a scan. Reflections are produced whenever the energy pulse enters into a material with different (varying) electromagnetic properties (i.e. permittivity and conductivity). The strength, or amplitude, of the reflection is determined by the contrast in the dielectric constants of the two materials. Apart from time domain systems, there are also frequency domain based systems (e.g. FMCW or stepped frequency) that otherwise use the same detection principle i.e. detection of contrast in dielectric (or conversely impedance) properties.

Both systems measure the distance along the track by odometry. About the Ferroscan it can be stated that it uses an optical encoder and has one set of two wheels placed at each end of the scanner, to guarantee movement as parallel as possible along the desired scanning direction.

About the Ferroscan it can be stated that the results are displayed on a monitor that can be interfaced to a PC to download the acquired data. The monitor contains data processing software that converts the raw data into user information. A PC version of the data processing software running on the monitor is also available.

About GSSI's systems it can be stated that the control unit contains the electronics that produce and regulate the pulse of radar energy that the antenna sends into the ground. It also has a built in computer and hard drive to record and store data for examination after fieldwork. Some systems, such as the GSSI SIR-20, are controlled by an attached laptop computer with pre-loaded control software. This system allows data processing and interpretation without having to transfer radar files to another computer while scanning. Data are collected in parallel transects and then placed together in their appropriate locations for computer processing in a specialised software program such as GSSI's RADAN. This software applies mathematical functions to the data in order to remove background interference, migrate hyperbolas, calculate accurate depth and much more. The computer then produces a horizontal surface at a particular depth in the record. This is referred to as a depth slice, which allows operators to interpret a plan view of the survey area.

Summarizing the disadvantages of the prior art, current commercially available reinforcement inspection/detection systems often cannot determine the exact location and diameter of reinforcement in concrete structures, or at least not reliable enough. It is therefore normal practice to at least partially remove the concrete, which is covering the reinforcement, by means of a pickaxe or other (powered) mechanical means, in order to investigate the location and diameter of the reinforcement. This process is very time consuming and also damages the concrete structure. Furthermore use of these inspection systems is very time consuming and therefore costly. The Ferroscan uses a kind of gridded place-mat at the size of an A0 sheet that has to be attached to the concrete structure. This "place-mat" has to be crossed horizontally and vertically four times, for a total of eight scans. After finishing this area the A0 has to be removed and attached to the next area to be investigated. According to GSSI's Georadar brochure, a system that also uses a place-mat, it takes approximately 5 minutes to investigate a floor segment of 2 by 2 feet. It is clear that investigation of all structural elements (including beams, columns, floors and walls) of an entire building will be a practically impossible operation.

Recently, the inspection of only the critical parts of a building complex in the Netherlands has taken approximately seven months. During this inspection both the Ferroscan and another prior art radar based product were used.

Hence there is a demand for a system which offers improvements with regard to:
- accuracy and reliability
- acquisition and processing time

The present invention aims to cancel out the disadvantages of the prior art systems by providing an improved system for detecting reinforcement in a structure. The inventive system preferably comprises a surface detection (sensing) subsystem arranged for determining the position of each relevant surface of each relevant structural element (i.e. walls, beams, columns, floors, ceilings etc.), as well as a reinforcement detection subsystem arranged for detecting the position of any reinforcement inside each relevant structural element under control of output of said surface detection subsystem.

In other words one subsystem, the surface detection subsystem, is provided for making a (3D) spatial representation (i.e. an image) of the outside surfaces of the relevant structural elements, in order to guide a second subsystem, the reinforcement detection subsystem, to the area / locations to be probed. Any reinforcement will, after all, be located behind the structural elements' exposed outside surfaces.

The outside surface of the structural elements could be detected by means of any signal having no or minor penetrating properties, e.g. a light signal or an acoustic signal (e.g. ultrasonic).

Preferably, the surface detection subsystem comprises electro-optical scanning means, arranged for making a digital image (3D map) of the exposed surfaces of the structural elements. The electro-optical scanning means, for instance, comprises at least one laser based scanner and digital processing means, which preferably are arranged to make three dimensional images of the exposed surfaces of the structural elements (inside or outside the structure).

Preferably, the reinforcement detection subsystem comprises electromagnetic scanning means, arranged for - guided by the outside scanning surface detection subsystem, functioning as a pilot for the reinforcement detection subsystem - scanning/probing inside or (even) through each relevant structural element. The electromagnetic scanning/probing means could comprise of (at least one) radar based device, arranged for making a digital image of the inside of each relevant structural element.

In this way the position of the outside structure ("exposed surfaces") of the relevant structural elements, determined by the surface detection subsystem, can be matched with the measurement data acquired with the reinforcement detection subsystem.

Furthermore tomographic reconstruction and/or inversion software may use the measurement data acquired with the structure probing EM sensor (radar) together with position (location) information derived from the other subsystem. This software may be used to reconstruct an image of the reinforcement in the structure, containing position, orientation and diameter, as well as to reconstruct the material properties of the embedding structure.

It may be preferred to use at least two simultaneously cooperating radar based devices which are arranged for making a digital image (3D representation) of the interior of each relevant structural element from at least two directions, e.g. from two opposite directions. This option may produce "inside images" (visualisation of the reinforcement) having a higher quality.

It may be preferred to use robotic means for moving said surface detection subsystem and/or said reinforcement detection subsystem along (part of) the structure to be investigated. Such a robot means may be arranged to follow a previously programmed route along and/or around the structural element(s) to be investigated. However a synergy can be achieved by guiding the robot means using the surface detection subsystem which, after all, is already arranged to "see" its environment. By doing so, the robot means can be arranged to find its route autonomously inside and/or outside the structure to be investigated. Simultaneously the generated 3D map can be updated. Thus, if located inside a building made up of various structural elements, surveying room by room and floor by floor, the whole building structure can be covered.

Thus improvements with regard to accuracy and reliability can be made by a more accurate movement, and position measurement, of the reinforcement detection subsystem, by preference in combination with the application of tomographic reconstruction and inversion software. Further improvements with regard to acquisition and processing time may be made by automating both processes.

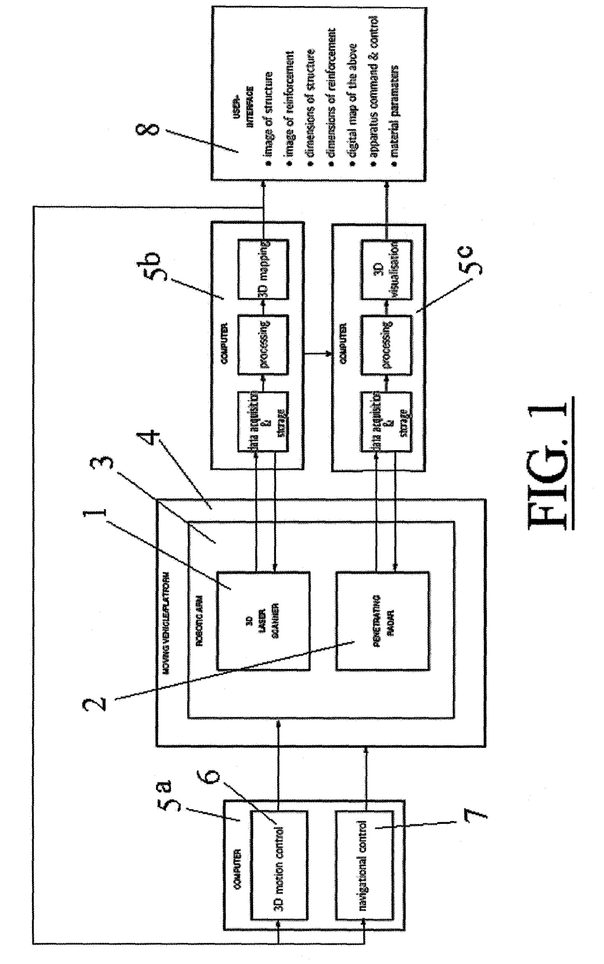

Hereinafter the invention will be elucidated making use of an exemplary embodiment, illustrated in Figure 1.

The diagram of figure 1 shows various logical components in relation to each other.

The system for detecting reinforcement structures in concrete building elements of a building in figure 1 comprises a surface detection subsystem formed by a 3D laser scanner (digitiser) module 1 which is arranged for detecting the position of each relevant surface of a structure (not shown). A reinforcement detection subsystem arranged for detecting the position of any reinforcement inside each relevant structural element is formed by a radar module 2. Both modules 1 and 2 are mounted on a robot arm 3 which is installed on a movable robot vehicle 4. Alternatively module 1 can be mounted elsewhere on the movable robot vehicle or can even be a separate apparatus. A computer subsystem 5a comprises 3D motion control 6 and navigational control 7 for the robot arm 3 and the robot vehicle 4 respectively.

The computer subsystem 5a, b and c (part of e.g. one or more PC's) is installed on or in the neighbourhood of the robot vehicle 4.

The output of the laser scanner 1 (the surface detection subsystem) is processed in a computer subsystem 5b, producing output which is fit to control, i.e. the robotic arm 3 with radar 2 (the reinforcement detection subsystem). In this way the laser scanner 3 "looks" for objects or areas which might contain reinforcement behind their exposed surfaces, and guides (via computer subsystems 5b, 5a and the robot components 4 and 3) the radar module 2 to those objects and areas to be investigated for the presence and properties of reinforcement.

It may be preferred to simultaneously use more than one system as depicted in figure 1. Two of such systems may be used in cooperation (e.g. by wireless coupling their computers 5) of which one system investigates a concrete wall (or other structural element) from one side and the other subsystem from another side or position. The signal of the one radar having penetrated the wall may be picked up by the other radar and vice versa. In this way very massive building elements may be successfully investigated, yielding high-quality results.

The robot vehicle 4 may be arranged to follow a previously programmed route inside and/or outside the structure or collection of structural elements, but can also, entirely or partly find its route autonomously under control of original or updated "observations" of the 3D laser scanner 1.

The output of the scanner is processed by computer subsystem 5b and partly used for controlling the robot 3, 4 with radar 2. The output of the radar 2 is processed in computer subsystem 5c using additional information regarding position and/or orientation from computer 5b. This is supplied to a user interface 8 which is also able to display images of the reinforcement of the structure to be investigated.

The system may be expanded with additional sensors, for instance metal detectors, acoustic, or infra-red or video cameras making it a multi-sensor system. An additional sensor fusion processing step would then be needed to complement it. The sensors can either be used for detecting the outer surface of a structure or obstacles, or for sensing/probing into the structure.
Several stages of simplification in processing can be implemented. For instance automatic identification of reinforcement may be switched off. Alternatively users may not be interested in the material properties of the structure under investigation but only want to see an image of the structure as generated by either/any of the sensors.

### Finally a summary of the various system components:

### Sensors:

(a) electro-optical i.e. laser scanner:
   This sensor scans its surrounding using the reflections of a laser-beam which is steered around the room in which the apparatus itself is located. Position information can be derived from e.g. the travel-time between transmitted and received laser signal or other means (i.e. holograhically etc.).
(b) electromagnetic i.e. radar system:
   This sensor uses electromagnetic waves of a certain frequency and bandwidth to probe solid structures or other dielectric media. Reflections occur due to the presence of metallic objects within the medium or are due to localised variations of the material parameters to which the sensor is sensitive, i.e. an impedance contrast or conversely a contrast in permittivity.

### Acquisition:

(a) mechanical scanning system i.e. robotic arm:
   A system which can scan a grid (in multiple dimensions) of measurement points very accurately and with a high degree of repeatability. Typically this can be accomplished by means of a robotic arm.
(b) moving platform i.e. (semi)autonomous vehicle:
   A vehicle that can follow a pre-programmed route or navigate autonomously through the environment. In former case a digital map initial position is needed while in the latter case position sensors and obstacle detection sensors are needed.

### Processing:

(a) mapping and map generating i.e. navigation in 3D environment:
   Software which generates an accurate digital map which can be used to produce navigational instructions for the moving platform.
(b) tomographic reconstruction and inversion software:
   Software implementing tomographic image reconstruction and inversion algorithms. Measurement data acquired with the structure probing EM sensor (radar) together with position (location) information is used to reconstruct an image of the interior of the structure as well as reconstruct the material properties.
(c) user interface:
   Results are merged into different views that can be manipulated by the user, i.e. zooming, panning, rotating etc. Different data and parameters can be overlayed in a semi-transparent manner. Existing design drawings can be pulled in and displayed (also overlayed) simultaneously. Reinforcing materials are automatically identified and can be exported in standardised formats.

## Claims

1. System for detecting reinforcement in structural elements, comprising
- a surface detection subsystem (1) arranged for making a digital 3D representation, e.g. an image or map, of each relevant surface of each relevant structural element;
- a reinforcement detection subsystem (2) arranged for making a digital 3D representation, e.g. an image or map, under control of output of said surface detection subsystem.

2. System according to claims 1, wherein the reinforcement detection subsystem (2) is arranged for making a digital 3D representation containing the position, orientation and diameter of any reinforcement as well as voids, inclusions, cracks and other defects inside each relevant structural element.

3. System according to claim 1, the surface detection subsystem comprising electro-optical scanning means (1).

4. System according to claim 3, the electro-optical scanning means comprising at least one laser based scanner (1) and digital processing means (5b).

5. System according to claim 1, the reinforcement detection subsystem comprising electromagnetic probing means (2).

6. System according to claim 5, the electromagnetic scanning means comprising at least one radar based device (2) .

7. System according to claim 6, comprising at least two simultaneously cooperating radar based devices, arranged for making a digital 3D representation of the inside of each relevant structural element from at least two directions.

8. System according to claim 1, comprising robot means (3,4) for moving said surface detection subsystem and/or said reinforcement detection subsystem.

9. System according to claim 8, said robot means being arranged to follow a previously programmed route inside and/or outside a building or along and/or around structural elements to be investigated.

10. System according to claim 8, said robot means being arranged to find its route autonomously inside and/or outside a building or along and/or around structural elements to be investigated.

11. System according to claim 10, said robot means being arranged to find its route autonomously under control of output of said surface detection subsystem.
